# EUROPÄISCHE PATENTSCHRIFT

(11) **EP 3 411 761 B1**
(45) Veröffentlichungstag und Bekanntmachung des Hinweises auf die Patenterteilung: **23.08.2023**
(21) Anmeldenummer: 16825720.2
(22) Anmeldetag: 16.12.2016
(51) Int. Cl.: G05B 19/042

(54) **AUTOMATISIERUNGSGERÄT**
AUTOMATION DEVICE
DISPOSITIF D'AUTOMATISATION

(30) Priorität: 02.02.2016 DE 102016101767
(43) Veröffentlichungstag der Anmeldung: 12.12.2018
(73) Patentinhaber: Phoenix Contact GmbH & Co. KG, 32825 Blomberg (DE)
(72) Erfinder: MATTHIES, Thorsten, 32683 Barntrup (DE)
(74) Vertreter: Patentship Patentanwaltsgesellschaft mbH
(86) Internationale Anmeldenummer: PCT/EP2016/081487
(87) Internationale Veröffentlichungsnummer: WO 2017/133821

(56) Entgegenhaltungen:
- DE-A1-102012 223 249
- US-A1- 2004 260 518
- US-A1- 2015 177 718

## Beschreibung

Die vorliegende Erfindung betrifft ein Automatisierungsgerät einer Gruppe von Automatisierungsgeräten.

Zustände von Maschinen wie Automatisierungsgeräten können durch an den Maschinen angebrachte Signalsäulen in Form von optischen und/oder akustischen Signalen angezeigt und/oder signalisiert werden. Eine optische und/oder eine akustische Überwachung der Zustände der Maschinen können jedoch aufgrund einer großen Entfernung, einer eingeschränkten oder versperrten Sicht auf die Signalsäulen oder aufgrund einer hohen Umgebungslautstärke erschwert oder nicht möglich sein. Ferner können die optische und/oder die akustische Überwachung der Zustände der Maschinen aufgrund einer Vielzahl von zu überwachenden Maschinen zusätzlich erschwert oder nicht möglich sein.

Maschinen wie Automatisierungsgeräte können ferner Maschinenleuchten umfassen, welche sowohl zur Signalisierung der Zustände der Maschinen als auch zur Beleuchtung der Maschinen eingesetzt werden können.

Die Druckschrift DE 10 2013 102 644 A1 beschreibt eine besonders vorteilhafte Leuchtvorrichtung, insbesondere eine LED-Maschinenleuchte, zur Beleuchtung in oder an einer Maschine. Hierbei wird von einer Steuereinrichtung ein Steuersignal zur Steuerung einer Leuchteigenschaft einer Lichtquelle der Leuchtvorrichtung an die Leuchtvorrichtung übertragen. Ferner ist ein Durchschleifen eines Steuersignals von der Steuereinrichtung über die Leuchtvorrichtung an eine weitere Leuchtvorrichtung beschreiben.

Die US 2015/0177718 A1 offenbart ein Verfahren, eine Vorrichtung und ein Computerprogramm, um einem Nutzer eines Steuerungssystems Details über ein Steuerungsobjekt bereitzustellen.

Die DE 10 2012 223 249 A1 offenbart ein Verfahren zum automatisierten Überwachen eines Betriebszustands eines Haushaltsgeräts.

Die US 2004/0260518 A1 offenbart ein Verfahren zum Betreiben von Automatisierungsgeräten.

Es ist die der Erfindung zugrundeliegende Aufgabe, ein effizientes Konzept zur Anzeige eines Zustandes oder einer Zustandsänderung eines Automatisierungsgeräts einer Gruppe von Automatisierungsgeräten zu schaffen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Die vorliegende Erfindung basiert auf der Erkenntnis, dass die obige Aufgabe durch ein Automatisierungsgerät einer Gruppe von Automatisierungsgeräten gelöst werden kann, welches eine Kommunikationsschnittstelle zum Empfangen einer Zustandsmeldung eines weiteren Automatisierungsgeräts der Gruppe von Automatisierungsgeräten umfasst, wobei die Zustandsmeldung auf einen Zustand oder eine Zustandsänderung des weiteren Automatisierungsgeräts hinweist. Das Automatisierungsgerät umfasst ferner eine Lichtquelle zum Emittieren eines Lichtsignals, welches den Zustand oder die Zustandsänderung des weiteren Automatisierungsgeräts anzeigt.

Gemäß einem ersten Aspekt betrifft die Erfindung ein Automatisierungsgerät einer Gruppe von Automatisierungsgeräten, mit einer Kommunikationsschnittstelle, zum Kommunizieren mit einem weiteren Automatisierungsgerät der Gruppe von Automatisierungsgeräten über ein Kommunikationsnetzwerk, wobei die Kommunikationsschnittstelle ausgebildet ist, eine Zustandsmeldung des weiteren Automatisierungsgeräts zu empfangen, welche auf einen Zustand oder eine Zustandsänderung des weiteren Automatisierungsgeräts hinweist, und einer Lichtquelle, welche ausgebildet ist, ansprechend auf das Empfangen der Zustandsmeldung ein Lichtsignal zu emittieren, das den Zustand oder die Zustandsänderung des weiteren Automatisierungsgeräts anzeigt. Dadurch wird der Vorteil erreicht, dass der Zustand oder die Zustandsänderung des weiteren Automatisierungsgeräts effizient von dem Automatisierungsgerät angezeigt werden kann. Ein Benutzer, welcher das Automatisierungsgerät bedient oder wartet, kann auf diese Art und Weise über den Zustand von weiteren Automatisierungsgeräten der Gruppe von Automatisierungsgeräten informiert werden, ohne die weiteren Automatisierungsgeräte einzeln untersuchen und/oder beobachten zu müssen. Dies kann zu einer erheblichen Zeitersparnis bei der Erfassung von Zuständen oder Zustandsänderungen der Automatisierungsgeräte in der Gruppe von Automatisierungsgeräten führen.

Das Automatisierungsgerät und das weitere Automatisierungsgerät können Maschinen einer Maschinengruppe sein. Die Gruppe von Automatisierungsgeräten kann eine Anordnung der Automatisierungsgeräte sein, wobei die Automatisierungsgeräte der Anordnung an einem gemeinsamen Ort, beispielsweise in einer Fertigungs- oder einer Werkshalle, angeordnet sein können. Das Automatisierungsgerät und das weitere Automatisierungsgerät können gleich sein, insbesondere die gleichen Komponenten und Merkmale aufweisen.

Die Zustandsmeldung kann einen Zustand oder einen Status des weiteren Automatisierungsgeräts, insbesondere einen fehlerhaften Zustand oder einen fehlerhaften Status des weiteren Automatisierungsgeräts, oder eine Zustands- oder Statusänderung des weiteren Automatisierungsgeräts anzeigen. Der Zustand kann ein Fehler des weiteren Automatisierungsgeräts, beispielsweise ein ungeplanter Prozessabbruch, sein. Die Zustandsmeldung kann eine Fehlermeldung oder eine Warnmeldung sein.

Gemäß einer Ausführungsform sind die Kommunikationsschnittstelle oder eine Steuerung des Automatisierungsgeräts ausgebildet, eine Charakteristik der Zustandsmeldung zu erfassen, welche eine Art und/oder eine Priorität des Zustands und/oder der Zustandsänderung anzeigt.

Die Charakteristik der Zustandsmeldung kann eine Geräte-ID und/oder einen Standort des weiteren Automatisierungsgeräts und/oder eine Fehlerart und/oder einen Fehlercode umfassen. Ferner kann die Charakteristik eine Prioritätsbewertung der Zustandsmeldung, beispielsweise hohe Priorität, mittlere Priorität oder niedrige Priorität, umfassen.

Gemäß einer Ausführungsform ist die Lichtquelle ausgebildet, das Lichtsignal in einer Lichtfarbe und/oder einer Lichthelligkeit und/oder einer Leuchtfrequenz zu emittieren, wobei die Lichtfarbe und/oder die Lichthelligkeit und/oder die Leuchtfrequenz des Lichtsignals dem Zustand, der Zustandsänderung und/oder der Charakteristik der Zustandsmeldung zugeordnet sind. Dadurch wird der Vorteil erreicht, dass ein Benutzer effizient unterschiedliche Zustände und/oder Zustandsänderungen anhand der Lichtfarbe oder der Leuchtfrequenz des Lichtsignals unterscheiden kann.

Gemäß einer Ausführungsform ist die Kommunikationsschnittstelle ausgebildet, eine weitere Zustandsmeldung von einem weiteren Automatisierungsgerät der Gruppe von Automatisierungsgeräten über das Kommunikationsnetzwerk zu empfangen und eine Charakteristik der weiteren Zustandsmeldung zu erfassen, wobei die weitere Zustandsmeldung auf einen weiteren Zustand oder eine weitere Zustandsänderung des weiteren Automatisierungsgeräts hinweist, und wobei die Charakteristik der weiteren Zustandsmeldung eine Art und/oder eine Priorität des weiteren Zustands oder der weiteren Zustandsänderung anzeigt. Dadurch wird der Vorteil erreicht, dass ein Benutzer über einen weiteren Zustand oder eine weitere Zustandsänderung eines weiteren Automatisierungsgeräts der Gruppe von Automatisierungsgeräten informiert werden kann, ohne das weitere Automatisierungsgerät untersuchen und/oder beobachten zu müssen. Eine Steuerung der Kommunikationsschnittstelle kann ausgebildet sein, die Charakteristik der weiteren Zustandsmeldung zu erfassen.

Gemäß einer Ausführungsform ist die Kommunikationsschnittstelle ausgebildet, die Charakteristik der Zustandsmeldung und die Charakteristik der weiteren Zustandsmeldung zu vergleichen und auf der Basis der jeweiligen Charakteristik eine Rangordnung der Zustandsmeldungen zu erfassen, wobei die Lichtquelle ausgebildet ist, das Lichtsignal zu emittieren, welches den Zustand oder die Zustandsänderung anzeigt, die von der Zustandsmeldung mit einem höheren Rang angezeigt werden. Dadurch wird der Vorteil erreicht, dass einem Benutzer effizient die Zustandsmeldung mit dem höchsten Rang angezeigt werden kann. Der Benutzer kann somit eine Ursache einer Fehlermeldung vor einer Ursache einer Warnungsmeldung mit geringerer Priorität als die Fehlermeldung beheben. Die Zustandsmeldungen können in der Rangordnung absteigend nach ihrer Priorität angeordnet sein, wobei die Zustandsmeldung mit der höchsten Priorität den höchsten Rang in der Rangordnung einnimmt. Die Steuerung der Kommunikationsschnittstelle kann ferner ausgebildet sein, die Charakteristik der Zustandsmeldung und die Charakteristik der weiteren Zustandsmeldung zu vergleichen und auf der Basis der jeweiligen Charakteristik eine Rangordnung der Zustandsmeldungen zu erfassen. Die Steuerung kann ferner die Lichtquelle zum Aussenden des Lichtsignals ansteuern.

Gemäß einer Ausführungsform umfasst die Lichtquelle zumindest eine LED. Die zumindest eine LED kann zum Anzeigen des Lichtsignals in den Lichtfarben Rot, Gelb, Blau oder Weiß ausgebildet sein.

Gemäß einer Ausführungsform ist die Lichtquelle in einem Geräteinnenraum des Automatisierungsgeräts angeordnet. Die Lichtquelle kann eine Geräte- bzw. Maschineninnenraumleuchte sein.

Gemäß einer Ausführungsform ist die Kommunikationsschnittstelle eine drahtlose Kommunikationsschnittstelle, insbesondere eine WLAN-Kommunikationsschnittstelle, eine Bluetooth-Kommunikationsschnittstelle, eine ZigBee-Kommunikationsschnittstelle oder eine Trusted-Wireless-Kommunikationsschnittstelle, oder eine drahtgebundene Kommunikationsschnittstelle, insbesondere eine Feldbus-Kommunikationsschnittstelle, eine Ethernet-Kommunikationsschnittstelle oder eine USB-Kommunikationsschnittstelle.

Erfindungsgemäß umfasst das Automatisierungsgerät eine Erfassungseinrichtung, wobei die Erfassungseinrichtung ausgebildet ist, ein Warten oder ein Bedienen des Automatisierungsgeräts durch einen Benutzer zu erfassen.

Die Erfassungseinrichtung kann ein Schalter, insbesondere ein Tastschalter sein. Die Erfassungseinrichtung kann mit einer Serviceklappe des Automatisierungsgeräts gekoppelt sein und ein Öffnen der Serviceklappe erfassen. Ferner kann die Erfassungseinrichtung mit einer weiteren Kommunikationsschnittstelle des Automatisierungsgeräts, beispielsweise einer Kommunikationsschnittstelle zum Anschließen eines Wartungsgeräts, und/oder einer Eingabevorrichtung des Automatisierungsgeräts, beispielsweise einem Touch-Display, kommunikationstechnisch verbunden sein.

Die Lichtquelle ist ausgebildet, das Lichtsignal ansprechend auf das Empfangen der Zustandsmeldung anzuzeigen, falls die Erfassungseinrichtung das Warten oder das Bedienen des Automatisierungsgeräts durch den Benutzer erfasst.

Gemäß einer Ausführungsform ist die Kommunikationsschnittstelle ausgebildet, eine Statusmeldung an das weitere Automatisierungsgerät auszusenden, falls die Erfassungseinrichtung das Warten oder das Bedienen des Automatisierungsgeräts erfasst. Die Statusmeldung kann das Warten oder das Bedienen des Automatisierungsgeräts anzeigen. Dadurch wird der Vorteil erreicht, dass das Automatisierungsgerät dem weiteren Automatisierungsgerät effizient seinen Wartungsstatus mitteilen kann. Das weitere Automatisierungsgerät kann daraufhin die Zustandsmeldung an das Automatisierungsgerät übersenden, beispielsweise um den Benutzer, welcher das Automatisierungsgerät wartet oder bedient, über den Zustand des weiteren Automatisierungsgeräts zu informieren.

Gemäß einer Ausführungsform umfasst das Automatisierungsgerät eine Steuerung, welche ausgebildet ist, einen Zustand oder eine Zustandsänderung des Automatisierungsgeräts zu erfassen. Dadurch wird der Vorteil erreicht, dass der Zustand oder die Zustandsänderung des Automatisierungsgeräts effizient erfasst werden können. Die Steuerung kann ein Prozessor sein oder einen Prozessor umfassen. Die Steuerung kann ferner zum Steuern, insbesondere Ansteuern, der Kommunikationsschnittstelle und/oder der Lichtquelle ausgebildet sein. Die Steuerung kann die vorgenannte Steuerung des Automatisierungsgeräts umfassen.

Gemäß einer Ausführungsform ist die Lichtquelle ausgebildet, ansprechend auf das Erfassen des Zustands oder der Zustandsänderung des Automatisierungsgeräts ein weiteres Lichtsignal zu emittieren, wobei das weitere Lichtsignal den Zustand oder die Zustandsänderung des Automatisierungsgeräts anzeigt. Dadurch wird der Vorteil erreicht, dass der Zustand oder die Zustandsänderung des Automatisierungsgeräts effizient von der Lichtquelle angezeigt werden können.

Gemäß einer Ausführungsform ist die Kommunikationsschnittstelle ausgebildet, eine weitere Statusmeldung des weiteren Automatisierungsgeräts zu empfangen, wobei die weitere Statusmeldung eine Wartung oder eine Bedienung des weiteren Automatisierungsgeräts durch den Benutzer anzeigt. Die Kommunikationsschnittstelle kann ausgebildet sein, bei Erfassen des Zustands oder der Zustandsänderung des Automatisierungsgeräts eine Zustandsmeldung an das weitere Automatisierungsgerät auszusenden, falls die weitere Statusmeldung des weiteren Automatisierungsgeräts vorliegt, wobei die Zustandsmeldung auf den Zustand oder die Zustandsänderung des Automatisierungsgeräts hinweist.

Gemäß einer Ausführungsform ist die Kommunikationsschnittstelle ausgebildet, bei Erfassen des Zustands oder der Zustandsänderung des Automatisierungsgeräts eine Gerätezustandsmeldung an ein Kommunikationsgerät, insbesondere ein mobiles Kommunikationsgerät wie ein Smartphone oder einen Laptop, auszusenden. Dadurch wird der Vorteil erreicht, dass der Zustand oder die Zustandsänderung effizient von dem Kommunikationsgerät angezeigt werden können. Ein Benutzer kann somit über den Zustand oder die Zustandsänderung des Automatisierungsgeräts informiert werde, ohne ein Automatisierungsgerät der Gruppe von Automatisierungsgeräten zu bedienen oder zu warten.

Gemäß einem zweiten Aspekt betrifft die Erfindung eine Anordnung von Automatisierungsgeräten in einer Gruppe von Automatisierungsgeräten mit einem ersten Automatisierungsgerät gemäß dem ersten Aspekt und mit einem zweiten Automatisierungsgerät gemäß dem ersten Aspekt, wobei das zweite Automatisierungsgerät ausgebildet ist, eine Zustandsmeldung auszusenden, und wobei das erste Automatisierungsgerät ausgebildet ist, die Zustandsmeldung des zweiten Automatisierungsgeräts zu empfangen und einen durch die empfangene Zustandsmeldung angezeigten Zustand oder eine Zustandsänderung des zweiten Automatisierungsgeräts optisch anzuzeigen. Dadurch wird der Vorteil erreicht, dass der Zustand oder die Zustandsänderung des zweiten Automatisierungsgeräts effizient von dem ersten Automatisierungsgerät angezeigt werden kann.

Gemäß einem dritten Aspekt betrifft die Erfindung ein Verfahren zum Anzeigen von Zuständen oder Zustandsänderungen von Automatisierungsgeräten in einer Gruppe von Automatisierungsgeräten mit einem ersten Automatisierungsgerät gemäß dem ersten Aspekt und mit einem zweiten Automatisierungsgerät gemäß dem ersten Aspekt, mit Aussenden einer Zustandsmeldung des zweiten Automatisierungsgeräts durch das zweite Automatisierungsgerät an das erste Automatisierungsgerät, Empfangen der Zustandsmeldung des zweiten Automatisierungsgeräts durch das erste Automatisierungsgerät, und optisches Anzeigen eines durch die empfangene Zustandsmeldung angezeigten Zustandes oder einer Zustandsänderung des zweiten Automatisierungsgeräts durch das erste Automatisierungsgerät. Dadurch wird der Vorteil erreicht, dass der Zustand oder die Zustandsänderung des zweiten Automatisierungsgeräts effizient von dem ersten Automatisierungsgerät angezeigt werden kann.

Ausführungsbeispiele der Erfindung sind in den Zeichnungen dargestellt und werden im Folgenden näher beschrieben.

Es zeigen:
- Fig. 1: eine schematische Darstellung eines Automatisierungsgeräts einer Gruppe von Automatisierungsgeräten;
- Fig. 2: ein Flussdiagramm eines Verfahrens zum Anzeigen von Zuständen oder Zustandsänderungen von Automatisierungsgeräten; und
- Fig. 3: eine schematische Darstellung eines Kommunikationsgeräts zum Anzeigen eines Zustands oder einer Zustandsänderung eines Automatisierungsgeräts.

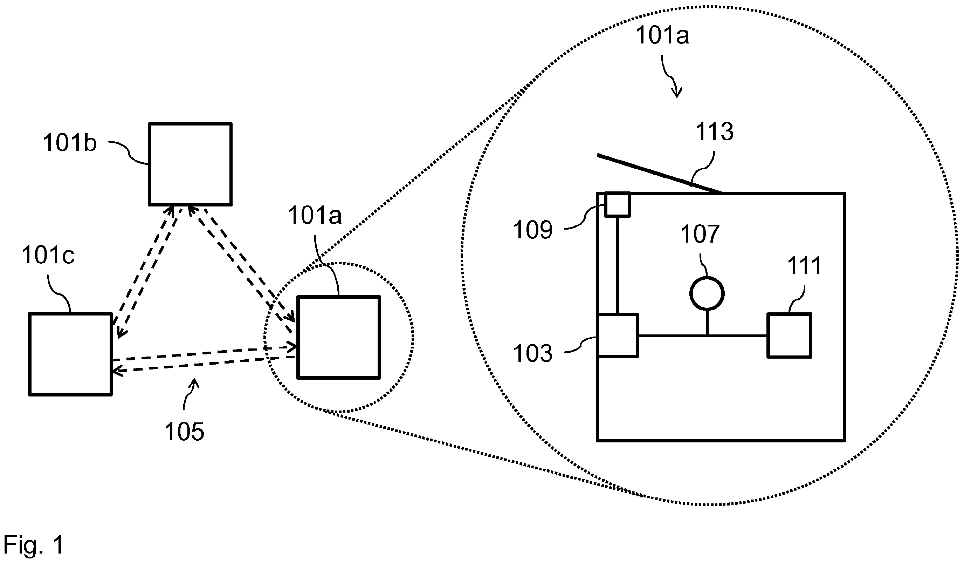

Fig. 1 zeigt eine schematische Darstellung eines Automatisierungsgeräts 101a einer Gruppe von Automatisierungsgeräten 101a-c gemäß einer Ausführungsform.

Das Automatisierungsgerät 101a umfasst eine Kommunikationsschnittstelle 103, zum Kommunizieren mit einem weiteren Automatisierungsgerät 101b-c der Gruppe von Automatisierungsgeräten 101a-c über ein Kommunikationsnetzwerk 105, wobei die Kommunikationsschnittstelle 103 ausgebildet ist, eine Zustandsmeldung des weiteren Automatisierungsgeräts 101b-c zu empfangen, welche auf einen Zustand oder eine Zustandsänderung des weiteren Automatisierungsgeräts 101b-c hinweist, und eine Lichtquelle 107, welche ausgebildet ist, ansprechend auf das Empfangen der Zustandsmeldung ein Lichtsignal zu emittieren, das den Zustand oder die Zustandsänderung des weiteren Automatisierungsgeräts 101b-c anzeigt.

Die Gruppe von Automatisierungsgeräten 101a-c in Fig. 1 umfasst das Automatisierungsgerät 101a und zwei weitere Automatisierungsgeräte 101b-c.

Das Automatisierungsgerät 101a und das weitere Automatisierungsgerät 101b-c können Maschinen einer Maschinengruppe sein. Die Gruppe von Automatisierungsgeräten 101a-c kann eine Anordnung der Automatisierungsgeräte 101a-c sein, wobei die Automatisierungsgeräte 101a-c der Anordnung an einem gemeinsamen Ort, beispielsweise in einer Fertigungs- oder einer Werkshalle, angeordnet sein können. Das Automatisierungsgerät 101a und das weitere Automatisierungsgerät 101b-c können gleich sein, insbesondere die gleichen Komponenten und Merkmale aufweisen.

Die Zustandsmeldung kann einen Zustand oder einen Status des weiteren Automatisierungsgeräts 101b-c, insbesondere einen fehlerhaften Zustand oder einen fehlerhaften Status des weiteren Automatisierungsgeräts 101b-c, oder eine Zustands- oder Statusänderung des weiteren Automatisierungsgeräts 101b-c anzeigen. Der Zustand kann ein Fehler des weiteren Automatisierungsgeräts 101b-c, beispielsweise ein ungeplanter Prozessabbruch, sein. In diesem Fall kann die Zustandsmeldung eine Fehlermeldung oder eine Warnmeldung sein.

Die Lichtquelle 107 kann eine Maschinenleuchte sein. Ferner kann die Lichtquelle 107 als Signalsäule des Automatisierungsgeräts 101a ausgebildet sein, oder in eine Signalsäule des Automatisierungsgeräts 101a integriert sein.

Die Kommunikationsschnittstelle 103 kann eine drahtlose oder eine drahtgebundene Kommunikationsschnittstelle sein. Die Kommunikationsschnittstelle 103 kann eine der folgenden Kommunikationsschnittstellen umfassen: WLAN-Kommunikationsschnittstelle, Bluetooth-Kommunikationsschnittstelle, ZigBee-Kommunikationsschnittstelle, Trusted-Wireless-Kommunikationsschnittstelle, Feldbus-Kommunikationsschnittstelle, Ethernet-Kommunikationsschnittstelle, USB-Kommunikationsschnittstelle.

Gemäß einer Ausführungsform ist die Kommunikationsschnittstelle 103 ausgebildet, eine Charakteristik der Zustandsmeldung zu erfassen. Die Charakteristik der Zustandsmeldung kann eine Art und/oder eine Priorität des Zustands und/oder der Zustandsänderung anzeigen.

Die Kommunikationsschnittstelle 103 kann ferner ausgebildet sein, eine weitere Zustandsmeldung sowie eine Charakteristik der weiteren Zustandsmeldung zu erfassen. Die weitere Zustandsmeldung kann auf einen weiteren Zustand und/oder eine weitere Zustandsänderung eines weiteren Automatisierungsgeräts 101b-c der Gruppe von Automatisierungsgeräten 101a-c hinweisen. Die Charakteristik der weiteren Zustandsmeldung kann eine Art und/oder eine Priorität des weiteren Zustands und/oder der weiteren Zustandsänderung anzeigen.

Die Zustandsmeldung und/oder die weitere Zustandsmeldung können als Broadcast-Telegramme vorliegen und von der Kommunikationsschnittstelle 103 empfangen werden. Das Kommunikationsnetzwerk 105 kann eine Broadcast Domain für die Zustandsmeldungen der Automatisierungsgeräte 101a-c bilden.

Die Charakteristik der Zustandsmeldung bzw. die Charakteristik der weiteren Zustandsmeldung können eine Geräte-ID und/oder der Standort des weiteren Automatisierungsgeräts 101b-c und/oder eine Fehlerart und/oder einen Fehlercode umfassen. Ferner können die Charakteristik der Zustandsmeldung bzw. die Charakteristik der weiteren Zustandsmeldung eine Prioritätsbewertung der Zustandsmeldung bzw. der weiteren Zustandsmeldung, beispielsweise hohe Priorität, mittlere Priorität oder niedrige Priorität, umfassen.

Das Kommunikationsnetzwerk 105 kann ein drahtloses oder ein drahtgebundenes Kommunikationsnetzwerk sein. Das Kommunikationsnetzwerk 105 kann ein lokales Netzwerk oder ein globales Netzwerk, insbesondere das Internet, sein.

Die Lichtquelle 107 kann eine LED sein oder zumindest eine LED umfassen. Die Lichtquelle 107 kann eine Maschinenleuchte, insbesondere eine LED-Maschinenleuchte sein. Ferner kann die Lichtquelle 107 als Signalsäule des Automatisierungsgeräts 101a ausgebildet sein, oder in eine Signalsäule des Automatisierungsgeräts 101a integriert sein. Bei der Lichtquelle 107 kann es sich ferner um eine Geräte- oder Maschineninnenraumleuchte handeln, welche in einem Geräteinnenraum des Automatisierungsgeräts 101a angeordnet ist.

Gemäß einer Ausführungsform ist die Lichtquelle 107 ausgebildet, das Lichtsignal in einer Lichtfarbe und/oder einer Leuchtfrequenz zu emittieren. Die Lichtquelle 107 kann dabei auf der Basis der Leuchtfrequenz unterschiedliche Signalarten, insbesondere Dauerlicht, Blinklicht oder Blitzlicht, erzeugen. Ferner kann die Lichtquelle 107 ausgebildet sein, das Lichtsignal in einer bestimmten Helligkeit zu emittieren.

Die Lichtquelle 107 kann ferner eine drahtgebundene und/oder eine drahtlose Energieversorgung sowie eine drahtgebundene und/oder eine drahtlose Schnittstelle umfassen. Die Schnittstelle kann Informationen zur Auswahl der Lichtfarbe, der Helligkeit oder der Signalart empfangen und/oder auswerten.

Die Lichtquelle 107, insbesondere die Schnittstelle der Lichtquelle 107, kann einen 5-poligen M12-Steckverbinder umfassen, dessen fünf Kontakte beispielsweise wie folgt belegt sind:

| M12-Steckverbinder | Belegung |
|---|---|
| Pin 1 | Versorgungsspannung 24 V DC |
| Pin 2 | Bit 1 für Auswahl der Lichtfarbe |
| Pin 3 | Gemeinsame Masse für die Versorgungsspannung und die Signale an den Kontakten 2 und 4 |
| Pin 4 | Bit 0 für die Auswahl der Lichtfarbe |
| Pin 5 | Funktionserde (FE) |

Die Kombinationen der Bits 0 und 1 für die Auswahl der Lichtfarbe können wie folgt sein:

| Bit 1 | Bit 0 | Belegung |
|---|---|---|
| 0 | 0 | Lichtfarbe Weiß |
| 0 | 1 | Lichtfarbe Rot |
| 1 | 0 | Lichtfarbe Gelb |
| 1 | 1 | Lichtfarbe Blau |

Die Lichtfarbe und/oder die Leuchtfrequenz und/oder die Helligkeit des Lichtsignals können der Charakteristik der Zustandsmeldung und/oder dem Zustand und/oder der Zustandsänderung bzw. der Charakteristik der weiteren Zustandsmeldung und/oder dem weiteren Zustand und/oder der weiteren Zustandsänderung zugeordnet sein. Um zu entscheiden, welche Zustandsmeldung eine höhere Priorität bei der Anzeige durch die Lichtquelle 107 erhalten soll, können die Kommunikationsschnittstelle 103 und/oder eine Steuerung 111 des Automatisierungsgeräts 101a ausgebildet sein, die Charakteristik der Zustandsmeldung und die Charakteristik der weiteren Zustandsmeldung zu vergleichen und auf der Basis der jeweiligen Charakteristik eine Rangordnung der Zustandsmeldungen zu erfassen. Die Lichtquelle 107 kann ausgebildet sein, auf der Basis der Rangordnung der Zustandsmeldungen das Lichtsignal zu emittieren, welches den Zustand oder die Zustandsänderung anzeigt, die von der Zustandsmeldung mit einem höheren Rang angezeigt werden. Die Steuerung 111 kann die Lichtquelle dabei zum Aussenden des Lichtsignals ansteuern.

Erfassen die Kommunikationsschnittstelle 103 und/oder die Steuerung 111 einen gleichen Rang der Zustandsmeldung und der weiteren Zustandsmeldung, so kann die Lichtquelle 107 ausgebildet sein, dasjenige Lichtsignal, welches der zuerst vorliegenden Zustandsmeldung zugeordnet ist, auszusenden. Die Steuerung 111 kann die Lichtquelle dabei zum Aussenden des Lichtsignals ansteuern. Somit können bereits länger vorliegende Zustände von Automatisierungsgeräten 101a-c bei der Anzeige priorisiert werden. Wird die zuerst vorliegende Zustandsmeldung nicht mehr empfangen, beispielsweise aufgrund eines Behebens einer Warnungs- oder Störursache an einem Automatisierungsgerät 101a-c, so kann die Lichtquelle 107 ausgebildet sein, dasjenige Lichtsignal, welches der zuvor nicht angezeigten Zustandsmeldung zugeordnet ist, auszusenden, falls diese noch vorliegt.

Das Automatisierungsgerät 101a in Fig. 1 umfasst ferner eine Erfassungseinrichtung 109.

Die Erfassungseinrichtung 109 kann ausgebildet sein, eine Warten oder ein Bedienen des Automatisierungsgeräts 101a durch einen Benutzer, insbesondere einen Maschinenbediener oder -überwacher, zu erfassen. Das Warten oder Bedienen des Automatisierungsgeräts 101a kann Überwachungs-, Einrichtungs-, Wartungs- oder Entstörungsarbeiten durch den Benutzer umfassen.

Die Erfassungseinrichtung 109 kann mit einer Eingabevorrichtung, beispielsweise einem Touch-Display, des Automatisierungsgeräts 101a verbunden sein, und kann eine Bedienung der Eingabevorrichtung durch einen Benutzer erfassen. Ferner kann die Erfassungseinrichtung 109 mit einer weiteren Kommunikationsschnittstelle des Automatisierungsgeräts 101a, beispielsweise einer Kommunikationsschnittstelle zum Anschließen eines Wartungsgeräts, kommunikationstechnisch verbunden sein und ein Anschließen des Wartungsgeräts erfassen. Die Kommunikationsschnittstelle 103 und die weitere Kommunikationsschnittstelle können gleich sein.

Das Automatisierungsgerät 101a in Fig. 1 umfasst ferner eine Serviceklappe 113. Die Serviceklappe 113 kann eine Klappe oder ein Fenster über einer Gehäuseöffnung des Automatisierungsgeräts 101a sein.

Die Erfassungseinrichtung 109 kann mit der Serviceklappe 113 verbunden sein, und ein Öffnen der Serviceklappe 113 durch einen Benutzer erfassen. Auf diese Art und Weise kann beispielsweise erkannt werden, ob Wartungsarbeiten an dem Automatisierungsgerät 101a durchgeführt werden. Die Erfassungseinrichtung 109 kann ein Schalter, insbesondere ein Tastschalter sein, welcher ein Öffnen der Serviceklappe 113 erfassen kann.

Das Automatisierungsgerät 101a in Fig. 1 umfasst ferner eine Steuerung 111. Die Steuerung 111 kann ausgebildet sein, einen Zustand oder eine Zustandsänderung des Automatisierungsgeräts 101a zu erfassen. Die Steuerung 111 kann ferner zum Steuern, insbesondere Ansteuern, der Kommunikationsschnittstelle 103 und/oder der Lichtquelle 107 ausgebildet sein. Die Steuerung 111 kann die vorgenannte Steuerung 111 des Automatisierungsgeräts 101a umfassen.

Die Steuerung 111 kann ein Prozessor bzw. ein Mikroprozessor sein, oder kann einen Prozessor bzw. einen Mikroprozessor umfassen. Die Steuerung 111 kann einen Speicher umfassen. Ferner kann die Steuerung 111 in ein an das Automatisierungsgerät 101a angeschlossenes Datenverarbeitungsgerät, beispielsweise einen Desktop-Computer, einen Laptop oder eine SPS bzw. PLC integriert sein.

Die Erfassungseinrichtung 109 kann die Steuerung 111 umfassen.

Der Zustand des Automatisierungsgeräts 101a kann ein Fehler des Automatisierungsgeräts 101a, beispielsweise ein ungeplanter Prozessabbruch, sein. Die Zustandsänderung des Automatisierungsgeräts 101a kann eine Statusänderung des Automatisierungsgeräts 101a, beispielsweise einen Prozessabbruch oder einen Prozessabschluss, anzeigen.

Gemäß einer Ausführungsform ist die Lichtquelle 107 ausgebildet, ansprechend auf das Erfassen des Zustands oder der Zustandsänderung des Automatisierungsgeräts 101a ein weiteres Lichtsignal zu emittieren, wobei das weitere Lichtsignal den Zustand oder die Zustandsänderung des Automatisierungsgeräts 101a anzeigt.

Da die Automatisierungsgeräte 101a-c der Gruppe von Automatisierungsgeräten 101a-c gleich sein können, kann auch jedes weitere Automatisierungsgerät 101b-c ausgebildet sein, eine Zustandsmeldung des Automatisierungsgeräts 101a mit einer jeweiligen Lichtquelle 107 anzuzeigen, um auf den Zustand oder die Zustandsänderung des Automatisierungsgeräts 101a hinzuweisen.

Zu diesem Zweck kann das weitere Automatisierungsgerät 101b-c bei Wartung oder Benutzung durch den Benutzer eine weitere Statusmeldung an das Automatisierungsgerät 101a aussenden. Die Kommunikationsschnittstelle 103 des Automatisierungsgeräts 101a kann ausgebildet sein, bei Vorliegen des Zustands oder der Zustandsänderung des Automatisierungsgeräts 101a eine Zustandsmeldung an das weitere Automatisierungsgerät 101b-c auszusenden, falls die weitere Statusmeldung des weiteren Automatisierungsgeräts 101b-c vorliegt, wobei die Zustandsmeldung auf den Zustand oder die Zustandsänderung des Automatisierungsgeräts 101a hinweist.

Auf diese Art und Weise kann jedes Automatisierungsgerät 101a-c der Gruppe von Automatisierungsgeräten 101a-c eine Zustandsmeldung eines anderen Automatisierungsgeräts 101a-c der Gruppe von Automatisierungsgeräten 101a-c anzeigen.

Gemäß einer Ausführungsform umfasst jedes Automatisierungsgerät 101a-c der Gruppe von Automatisierungsgeräten 101a-c eine Maschinensteuerung. Die Maschinensteuerung kann zur drahtgebundenen oder drahtlosen Ansteuerung der Lichtquellen 107 der Automatisierungsgeräte 101a-c ausgebildet sein. Ferner kann die Zusammenfassung der Automatisierungsgeräte 101a-c zu der Gruppe durch bzw. in der Maschinensteuerung der zu der jeweiligen Gruppe gehörenden Automatisierungsgeräte 101a-c erfolgen. Die Maschinensteuerung eines jeden Automatisierungsgeräts 101a-c kann eine Speicherprogrammierbare Steuerung (SPS) sein.

Gemäß einer Ausführungsform umfasst die Maschinensteuerung die Kommunikationsschnittstelle 103 und/oder die Erfassungsvorrichtung 109 und/oder die Steuerung 111 und/oder den 5-poligen M12-Steckverbinder.

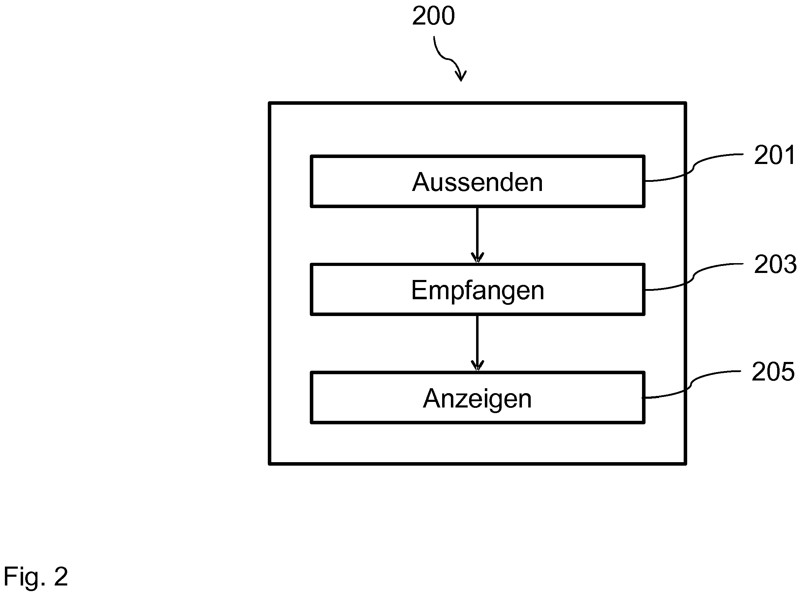

Fig. 2 zeigt ein Flussdiagramm eines Verfahrens 200 zum Anzeigen von Zuständen oder Zustandsänderungen von Automatisierungsgeräten 101a-c in der Gruppe von Automatisierungsgeräten 101a-c gemäß einer Ausführungsform, wobei die Gruppe von Automatisierungsgeräten 101a-c ein erstes Automatisierungsgerät und ein zweites Automatisierungsgerät umfasst.

Das erste Automatisierungsgerät kann dem Automatisierungsgerät 101a und das zweite Automatisierungsgerät einem weiteren Automatisierungsgerät 101b-c in Fig. 1 entsprechen.

Das Verfahren 200 umfasst ein Aussenden 201 einer Zustandsmeldung des zweiten Automatisierungsgeräts 101b-c durch das zweite Automatisierungsgerät 101b-c an das erste Automatisierungsgerät 101a, ein Empfangen 203 der Zustandsmeldung des zweiten Automatisierungsgeräts 101b-c durch das erste Automatisierungsgerät 101a, und ein optisches Anzeigen 205 eines durch die empfangene Zustandsmeldung angezeigten Zustandes oder einer Zustandsänderung des zweiten Automatisierungsgeräts 101b-c durch das erste Automatisierungsgerät 101a.

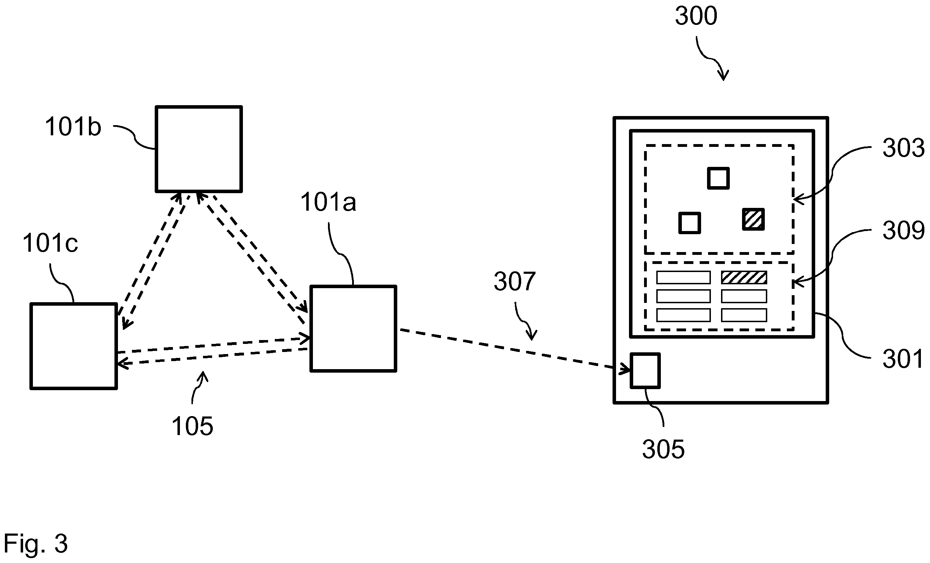

Fig. 3 zeigt eine schematische Darstellung eines Kommunikationsgeräts 300 zum Anzeigen des Zustands oder der Zustandsänderung des Automatisierungsgeräts 101a der Gruppe von Automatisierungsgeräten 101a-c gemäß einer Ausführungsform.

Das Kommunikationsgerät 300 kann eine Anzeige 301, insbesondere ein Display, umfassen, welche ausgebildet sein kann, die Automatisierungsgeräte 101a-c der Gruppe von Automatisierungsgeräten in einer digitalen Karte 303 zu visualisieren. Die Automatisierungsgeräte 101a-c können in der digitalen Karte 303 in der Form eines Hallenplans visualisiert sein.

Die Kommunikationsschnittstelle 103 des Automatisierungsgeräts 101a kann ausgebildet sein, bei Erfassen des Zustands oder der Zustandsänderung des Automatisierungsgeräts 101a eine Gerätezustandsmeldung an das Kommunikationsgerät 300, auszusenden. Das Kommunikationsgerät 300 kann eine Kommunikationsschnittstelle 305 umfassen, welche ausgebildet ist, über ein weiteres Kommunikationsnetzwerk 307 die Gerätezustandsmeldung des Automatisierungsgeräts 101a zu empfangen.

Die Anzeige 301 kann ausgebildet sein, ansprechend auf das Empfangen der Gerätezustandsmeldung des Automatisierungsgeräts 101a, den Zustand oder die Zustandsänderung des Automatisierungsgeräts 101a in der digitalen Karte zu markieren, insbesondere durch ein farbiges Hervorheben zu markieren.

Die Anzeige 301 kann ferner ausgebildet sein, die Automatisierungsgeräte 101a-c der Gruppe von Automatisierungsgeräten in einer Liste 309 anzuzeigen. Ferner kann die Anzeige 301 ausgebildet sein, Zustände oder Zustandsänderungen der Automatisierungsgeräte 101a-c in der Liste 309 anzuzeigen.

Die Gerätezustandsmeldung kann wie die Zustandsmeldung einen Zustand oder eine Zustandsänderung des Automatisierungsgeräts 101a anzeigen. Die Gerätezustandsmeldung und die Zustandsmeldung eines Automatisierungsgeräts 101a-c können gleich sein. Ferner kann die Gerätezustandsmeldung im Vergleich zur Zustandsmeldung zusätzliche Informationen, beispielsweise GNSS-Daten des Automatisierungsgeräts 101a, umfassen.

Das weitere Kommunikationsnetzwerk 307 kann ein drahtloses oder ein drahtgebundenes Kommunikationsnetzwerk sein. Das Kommunikationsnetzwerk 105 und das weitere Kommunikationsnetzwerk 307 können gleich sein.

Die Kommunikationsschnittstelle 305 des Kommunikationsgeräts 300 kann ferner ausgebildet sein, über das weitere Kommunikationsnetzwerk 307 weitere Gerätezustandsmeldungen der weiteren Automatisierungsgeräte 101a zu empfangen. Die Anzeige 301 kann ausgebildet sein, ansprechend auf das Empfangen der weiteren Gerätezustandsmeldungen der weiteren Automatisierungsgeräte 101b-c die weiteren Automatisierungsgeräte 101b-c in der digitalen Karte 303 zu markieren.

Das Kommunikationsgerät 300 kann ein mobiles Kommunikationsgerät, insbesondere ein Smartphone oder ein Laptop, sein.

### BEZUGSZEICHENLISTE

- 101a: Automatisierungsgerät
- 101b: weiteres Automatisierungsgerät
- 101c: weiteres Automatisierungsgerät
- 103: Kommunikationsschnittstelle
- 105: Kommunikationsnetzwerk
- 107: Lichtquelle
- 109: Erfassungseinrichtung
- 111: Steuerung
- 113: Serviceklappe

- 200: Verfahren
- 201: Herstellen
- 203: Empfangen
- 205: Emittieren

- 300: Kommunikationsgerät
- 301: Anzeige
- 303: digitale Karte
- 305: Kommunikationsschnittstelle
- 307: weiteres Kommunikationsnetzwerk
- 309: Liste

## Patentansprüche

1. Automatisierungsgerät (101a) einer Gruppe von Automatisierungsgeräten (101a-c), mit
einer Kommunikationsschnittstelle (103), zum Kommunizieren mit einem weiteren Automatisierungsgerät (101b-c) der Gruppe von Automatisierungsgeräten (101a-c) über ein Kommunikationsnetzwerk (105);
wobei die Kommunikationsschnittstelle (103) ausgebildet ist, eine Zustandsmeldung des weiteren Automatisierungsgeräts (101b-c) zu empfangen, welche auf einen Zustand oder eine Zustandsänderung des weiteren Automatisierungsgeräts (101b-c) hinweist; und
einer Lichtquelle (107), welche ausgebildet ist, ansprechend auf das Empfangen der Zustandsmeldung ein Lichtsignal zu emittieren, das den Zustand oder die Zustandsänderung des weiteren Automatisierungsgeräts (101b-c) anzeigt,
**dadurch gekennzeichnet, dass** das Automatisierungsgerät (101a) eine Erfassungseinrichtung (109) umfasst, wobei die Erfassungseinrichtung (109) ausgebildet ist, ein Warten oder ein Bedienen des Automatisierungsgeräts (101a) durch einen Benutzer zu erfassen, und
wobei die Lichtquelle (107) ausgebildet ist, das Lichtsignal ansprechend auf das Empfangen der Zustandsmeldung anzuzeigen, falls die Erfassungseinrichtung (109) das Warten oder das Bedienen des Automatisierungsgeräts (101a) erfasst.

2. Automatisierungsgerät (101a) nach Anspruch 1, wobei die Kommunikationsschnittstelle (103) oder eine Steuerung (111) des Automatisierungsgeräts (101a) ausgebildet sind, eine Charakteristik der Zustandsmeldung zu erfassen, welche eine Art oder eine Priorität des Zustands oder der Zustandsänderung anzeigt.

3. Automatisierungsgerät (101a) nach Anspruch 2, wobei die Lichtquelle (107) ausgebildet ist, das Lichtsignal in einer Lichtfarbe und/oder einer Lichthelligkeit und/oder einer Leuchtfrequenz zu emittieren, wobei die Lichtfarbe und/oder die Lichthelligkeit und/oder die Leuchtfrequenz des Lichtsignals dem Zustand, der Zustandsänderung oder der Charakteristik der Zustandsmeldung zugeordnet sind.

4. Automatisierungsgerät (101a) nach einem der vorstehenden Ansprüche, wobei die Kommunikationsschnittstelle (103) ausgebildet ist, eine weitere Zustandsmeldung von einem weiteren Automatisierungsgerät (101b-c) der Gruppe von Automatisierungsgeräten (101a-c) über das Kommunikationsnetzwerk (105) zu empfangen und eine Charakteristik der weiteren Zustandsmeldung zu erfassen, wobei die weitere Zustandsmeldung auf einen weiteren Zustand oder eine weitere Zustandsänderung des weiteren Automatisierungsgeräts (101b-c) hinweist, und wobei die Charakteristik der weiteren Zustandsmeldung eine Art oder eine Priorität des weiteren Zustands oder der weiteren Zustandsänderung anzeigt.

5. Automatisierungsgerät (101a) nach Anspruch 2 oder 3 und Anspruch 4, wobei die Kommunikationsschnittstelle (103) ausgebildet ist, die Charakteristik der Zustandsmeldung und die Charakteristik der weiteren Zustandsmeldung zu vergleichen und auf der Basis der jeweiligen Charakteristik eine Rangordnung der Zustandsmeldungen zu erfassen, wobei die Lichtquelle (107) ausgebildet ist, das Lichtsignal zu emittieren, welches den Zustand oder die Zustandsänderung anzeigt, die von der Zustandsmeldung mit einem höheren Rang angezeigt werden.

6. Automatisierungsgerät (101a) nach einem der vorstehenden Ansprüche, wobei die Lichtquelle (107) zumindest eine LED umfasst.

7. Automatisierungsgerät (101a) nach einem der vorstehenden Ansprüche, wobei die Lichtquelle (107) in einem Geräteinnenraum des Automatisierungsgeräts (101a) angeordnet ist.

8. Automatisierungsgerät (101a) nach einem der vorstehenden Ansprüche, wobei die Kommunikationsschnittstelle (103) eine drahtlose Kommunikationsschnittstelle oder eine drahtgebundene Kommunikationsschnittstelle ist.

9. Automatisierungsgerät (101a) nach einem der vorstehenden Ansprüche, wobei die Kommunikationsschnittstelle (103) ausgebildet ist, eine Statusmeldung an das weitere Automatisierungsgerät (101b-c) auszusenden, falls die Erfassungseinrichtung (109) das Warten oder das Bedienen des Automatisierungsgeräts (101a) erfasst.

10. Automatisierungsgerät (101a) nach einem der vorstehenden Ansprüche, wobei das Automatisierungsgerät (101a) eine Steuerung (111) umfasst, welche ausgebildet ist, einen Zustand oder eine Zustandsänderung des Automatisierungsgeräts (101a) zu erfassen.

11. Automatisierungsgerät (101a) nach Anspruch 10, wobei die Lichtquelle (107) ausgebildet ist, ansprechend auf das Erfassen des Zustands oder der Zustandsänderung des Automatisierungsgeräts (101a) ein weiteres Lichtsignal zu emittieren, wobei das weitere Lichtsignal den Zustand oder die Zustandsänderung des Automatisierungsgeräts (101a) anzeigt.

12. Automatisierungsgerät (101a) nach Anspruch 10 oder 11, wobei die Kommunikationsschnittstelle (103) ausgebildet ist, bei Erfassen des Zustands oder der Zustandsänderung des Automatisierungsgeräts (101a) eine Gerätezustandsmeldung an ein Kommunikationsgerät, insbesondere ein mobiles Kommunikationsgerät wie ein Smartphone oder einen Laptop, auszusenden.

13. Anordnung von Automatisierungsgeräten (101a-c) in einer Gruppe von Automatisierungsgeräten (101a-c) mit einem ersten Automatisierungsgerät (101a) nach einem der vorstehenden Ansprüche 1 bis 12 und mit einem zweiten Automatisierungsgerät (101b-c) nach einem der vorstehenden Ansprüche 1 bis 12;
wobei das zweite Automatisierungsgerät (101b-c) ausgebildet ist, eine Zustandsmeldung auszusenden; und
wobei das erste Automatisierungsgerät (101a) ausgebildet ist, die Zustandsmeldung des zweiten Automatisierungsgeräts (101b-c) zu empfangen und einen durch die empfangene Zustandsmeldung angezeigten Zustand oder eine Zustandsänderung des zweiten Automatisierungsgeräts (101b-c) optisch durch ein Lichtsignal einer Lichtquelle des ersten Automatisierungsgeräts (101a) anzuzeigen.

14. Verfahren (200) zum Anzeigen von Zuständen oder Zustandsänderungen von Automatisierungsgeräten (101a-c) in einer Gruppe von Automatisierungsgeräten (101a-c) mit einem ersten Automatisierungsgerät (101a) nach einem der vorstehenden Ansprüche 1 bis 12 und mit einem zweiten Automatisierungsgerät (101b-c) nach einem der vorstehenden Ansprüche 1 bis 12, mit:
Aussenden (201) einer Zustandsmeldung des zweiten Automatisierungsgeräts (101b-c) durch das zweite Automatisierungsgerät (101b-c) an das erste Automatisierungsgerät (101a);
Empfangen (203) der Zustandsmeldung des zweiten Automatisierungsgeräts (101b-c) durch das erste Automatisierungsgerät (101a); und
optisches Anzeigen (205) eines durch die empfangene Zustandsmeldung angezeigten Zustandes oder einer Zustandsänderung des zweiten Automatisierungsgeräts (101b-c) durch das erste Automatisierungsgerät (101a),
**dadurch gekennzeichnet, dass** das Automatisierungsgerät (101a) eine Erfassungseinrichtung (109) umfasst, wobei die Erfassungseinrichtung (109) ausgebildet ist, ein Warten oder ein Bedienen des Automatisierungsgeräts (101a) durch einen Benutzer zu erfassen, und
wobei die Lichtquelle (107) ausgebildet ist, das Lichtsignal ansprechend auf das Empfangen der Zustandsmeldung anzuzeigen, falls die Erfassungseinrichtung (109) das Warten oder das Bedienen des Automatisierungsgeräts (101a) erfasst.

## Claims

1. An automation device (101a) of a group of automation devices (101a-c), comprising:
a communication interface (103) for communicating with a further automation device (101b-c) of the group of automation devices (101a-c) via a communication network (105);
wherein the communication interface (103) is configured to receive a status message of the further automation device (101b-c), which indicates a state or a change in state of the further automation device (101b-c); and
a light source (107), which is configured to emit a light signal indicating the state or the change in state of the further automation device (101b-c) in response to the receiving of the status message,
**characterizing in that** the automation device (101a) comprises a detection device (109), wherein the detection device (109) is configured to detect a maintaining or operating of the automation device (101a) by a user,
wherein the light source (107) is configured to display the light signal in response to receiving of the status message when the detection device (109) detects the maintaining or operating of the automation device (101a).

2. The automation device (101a) according to claim 1, wherein the communication interface (103) or a controller (111) of the automation device (101a) are configured to detect a characteristic of the status message, which indicates a type and/or a priority of the state and/or the change in state.

3. The automation device (101a) according to claim 2, wherein the light source (107) is configured to emit the light signal in one light color and/or brightness and/or frequency, wherein the light color and/or brightness and/or frequency of the light signal is associated with the state, the change in state and/or the characteristic of the status message.

4. The automation device (101a) according to one of the preceding claims, wherein the communication interface (103) is configured to receive a further status message from a further automation device (101b-c) of the group of automation devices (101a-c) via the communication network (105) and detect a characteristic of the further status message, wherein the further status message indicates a further state or a further change in state of the further automation device (101b-c), and wherein the characteristic of the further status message indicates a type and/or a priority of the further state and/or the further change in state.

5. The automation device (101a) according to claim 2 or 3 and claim 4, wherein the communication interface (103) is configured to compare the characteristic of the status message and the characteristic of the further status message and detect a ranking of the status messages based on the respective characteristics, wherein the light source (107) is configured to emit the light signal, which indicates the state or the change in state denoted by the status message as being of higher priority.

6. The automation device (101a) according to one of the preceding claims, wherein the light source (107) comprises at least one LED.

7. The automation device (101a) according to one of the preceding claims, wherein the light source (107) is arranged in an interior space of the automation device (101a).

8. The automation device (101a) according to one of the preceding claims, wherein the communication interface (103) is a wireless communication interface or a wired communication interface.

9. The automation device (101a) according to one of the preceding claims, wherein the communication interface (103) is configured to transmit a status message to the further automation device (101b-c) when the detection device (109) detects the maintaining or operating of the automation device (101a).

10. The automation device (101a) according to one of the preceding claims, wherein the automation device (101a) comprises a controller (111) configured to detect a state or a change in state of the automation device (101a).

11. The automation device (101a) according to claim 10, wherein the light source (107) is configured to emit a further light signal in response to the detecting of the state or the change in state of the automation device (101a), wherein the further light signal indicates the state or the change in state of the automation device (101a).

12. The automation device (101a) according to claim 10 or 11, wherein the communication interface (103) is configured to transmit a device status message to a communication device, in particular a mobile communication device such as a smartphone or a laptop, upon the detecting of the state or the change in state of the automation device (101a).

13. An arrangement of automation devices (101a-c) in a group of automation devices (101a-c) comprising a first automation device (101a) according to one of the preceding claims 1 to 12 and a second automation device (101b-c) according to one of the preceding claims 1 to 12;
wherein the second automation device (101b-c) is configured to transmit a status message; and
wherein the first automation device (101a) is configured to receive the status message of the second automation device (101b-c) and visually display a state or change in state of the second automation device (101b-c) by a light signal of a light source of the first automation device (101a) as indicated by the status message received.

14. A method (200) for indicating states or changes in states of automation devices (101a-c) in a group of automation devices (101a-c) comprising a first automation device (101a) according to one of the preceding claims 1 to 12 and a second automation device (101b-c) according to one of the preceding claims 1 to 12, comprising:
transmitting (201) a status message of the second automation device (101b-c) via said second automation device (101b-c) to the first automation device (101a);
receiving (203) the status message of the second automation device (101b-c) by the first automation device (101a); and
optically displaying (205) a state or change in state of the second automation device (101b-c) as indicated by the status message received by the first automation device (101a),
**characterizing in that** the automation device (101a) comprises a detection device (109), wherein the detection device (109) is configured to detect a maintaining or operating of the automation device (101a) by a user,
wherein the light source (107) is configured to display the light signal in response to receiving of the status message when the detection device (109) detects the maintaining or operating of the automation device (101a).

## Revendications

1. Dispositif d'automatisme (101a) d'un groupe de dispositifs d'automatisme (101a-c), avec:
une interface de communication (103) pour communiquer avec un autre dispositif d'automatisation (101b-c) du groupe de dispositifs d'automatisation (101a-c) via un réseau de communication (105);
dans lequel l'interface de communication (103) est conçue pour recevoir un rapport d'état de l'autre dispositif d'automatisation (101b-c), qui indique un état ou un changement d'état de l'autre dispositif d'automatisation (101b-c); et
une source lumineuse (107), qui est conçue pour émettre un signal lumineux en réponse à la réception du rapport d'état, qui indique l'état ou le changement d'état de l'autre dispositif d'automatisation (101b-c),
**caractérisé en ce que** le dispositif d'automatisation (101a) comprend un dispositif de détection (109), le dispositif de détection (109) étant adapté pour détecter l'attente ou le fonctionnement du dispositif d'automatisation (101a) par un utilisateur, et
dans lequel la source lumineuse (107) est conçue pour afficher le signal lumineux en réponse à la réception du message d'état si le dispositif de détection (109) détecte l'attente ou le fonctionnement du dispositif d'automatisation (101a).

2. Dispositif d'automatisation (101a) selon la revendication 1, dans lequel l'interface de communication (103) ou un contrôleur (111) du dispositif d'automatisation (101a) sont agencés pour détecter une caractéristique du rapport d'état, qui indique un type ou une priorité de le statut ou le changement de statut.

3. Dispositif d'automatisation (101a) selon la revendication 2, dans lequel la source lumineuse (107) est agencée pour émettre le signal lumineux dans une couleur claire et/ou une intensité lumineuse et/ou une fréquence d'éclairage, la couleur claire et/ou la l'intensité lumineuse et/ou la fréquence d'éclairage du signal lumineux sont affectées à l'état, au changement d'état ou à la caractéristique du message d'état.

4. Dispositif d'automatisation (101a) selon l'une des revendications précédentes, dans lequel l'interface de communication (103) est conçue pour recevoir un autre rapport d'état d'un autre dispositif d'automatisation (101b-c) du groupe de dispositifs d'automatisation (101a-c) via le réseau de communication (105) et pour enregistrer une caractéristique de l'autre état rapport, l'autre rapport d'état indique un autre état ou un autre changement d'état de l'autre dispositif d'automatisation (101b-c), et dans lequel la caractéristique de l'autre message d'état indique un type ou une priorité de l'autre état ou de l'autre changement d'état.

5. Dispositif d'automatisation (101a) selon la revendication 2 ou 3 et la revendication 4, dans lequel l'interface de communication (103) est conçue pour comparer la caractéristique du rapport d'état et la caractéristique de l'autre rapport d'état et pour enregistrer un classement du rapport d'état. des rapports sur la base de la caractéristique respective, dans lequel la source lumineuse (107) est adaptée pour émettre le signal lumineux indicatif de l'état ou du changement d'état indiqué par le message d'état avec un rang supérieur.

6. Dispositif d'automatisation (101a) selon l'une des revendications précédentes, dans lequel la source lumineuse (107) comprend au moins une LED.

7. Dispositif d'automatisation (101a) selon l'une des revendications précédentes, dans lequel la source lumineuse (107) est agencée dans un dispositif intérieur du dispositif d'automatisation (101a).

8. Dispositif d'automatisation (101a) selon l'une des revendications précédentes, dans lequel l'interface de communication (103) est une interface de communication sans fil ou une interface de communication filaire.

9. Dispositif d'automatisation (101a) selon l'une des revendications précédentes, dans lequel l'interface de communication (103) est conçue pour envoyer un message d'état à l'autre dispositif d'automatisation (101b-c) si le dispositif de détection (109) attend ou actionne le dispositif d'automatisation (101a) enregistré.

10. Dispositif d'automatisation (101a) selon l'une des revendications précédentes, dans lequel le dispositif d'automatisation (101a) comprend un contrôleur (111) qui est conçu pour détecter un état ou un changement d'état du dispositif d'automatisation (101a).

11. Dispositif d'automatisation (101a) selon la revendication 10, dans lequel la source lumineuse (107) est agencée pour émettre un autre signal lumineux en réponse à la détection de l'état ou du changement d'état du dispositif d'automatisation (101a), d'autant plus signal lumineux indiquant l'état ou le changement d'état du dispositif d'automatisation (101a) indique.

12. Dispositif d'automatisation (101a) selon la revendication 10 ou 11, dans lequel l'interface de communication (103) est agencée pour envoyer un message d'état du dispositif à un dispositif de communication, notamment un dispositif de communication mobile tel qu'un smartphone ou un ordinateur portable, lorsque l'état ou le changement d'état du dispositif d'automatisation (101a) est détecté, envoyé.

13. Agencement des dispositifs d'automatisation (101a-c) dans un groupe de dispositifs d'automatisation (101a-c) avec un premier dispositif d'automatisation (101a) selon l'une des revendications précédentes 1 à 12 et avec un second dispositif d'automatisation (101b- c) selon l'une des revendications précédentes 1 à 12;
dans lequel le deuxième dispositif d'automatisation (101b-c) est conçu pour émettre un message d'état; et
dans lequel le premier dispositif d'automatisation (101a) est conçu pour recevoir le rapport d'état du deuxième dispositif d'automatisation (101b-c) et un état indiqué par le rapport d'état reçu ou un changement d'état du deuxième dispositif d'automatisation (101b-c) optiquement par un signal lumineux provenant d'une source lumineuse du premier dispositif d'automatisation (101a) à afficher.

14. Procédé (200) d'affichage d'états ou de changements d'états d'équipements d'automatisation (101a-c) dans un groupe d'équipements d'automatisation (101a-c) avec un premier équipement d'automatisation (101a) selon l'une des revendications précédentes 1 à 12 et avec un second dispositif d'automatisation (101b-c) selon l'une des revendications précédentes 1 à 12, avec:
Transmission (201) d'un rapport d'état du deuxième dispositif d'automatisation (101b-c) par le deuxième dispositif d'automatisation (101b-c) au premier dispositif d'automatisation (101a);
recevoir (203) le rapport d'état du deuxième dispositif d'automatisation (101b-c) par le premier dispositif d'automatisation (101a); et
affichage optique (205) d'un état indiqué par le message d'état reçu ou un changement d'état du deuxième dispositif d'automatisation (101b-c) par le premier dispositif d'automatisation (101a),
**caractérisé en ce que** le dispositif d'automatisation (101a) comprend un dispositif de détection (109), le dispositif de détection (109) étant adapté pour détecter l'attente ou le fonctionnement du dispositif d'automatisation (101a) par un utilisateur, et
dans lequel la source lumineuse (107) est conçue pour afficher le signal lumineux en réponse à la réception du message d'état si le dispositif de détection (109) détecte l'attente ou le fonctionnement du dispositif d'automatisation (101a).
